# EUROPÄISCHE PATENTSCHRIFT

(11) **EP 3 337 019 B1**
(45) Veröffentlichungstag und Bekanntmachung des Hinweises auf die Patenterteilung: **17.04.2019**
(21) Anmeldenummer: 16204588.4
(22) Anmeldetag: 16.12.2016
(51) Int. Cl.: H02K 41/02, H02K 9/22, H02K 41/03, H02K 1/20, H02K 9/19

(54) **PRIMÄRTEIL MIT KÜHLPLATTE**
PRIMARY PART COMPRISING A COOLING PLATE
PART PRIMAIRE COMPRENANT UNE PLAQUE DE REFROIDISSEMENT

(43) Veröffentlichungstag der Anmeldung: 20.06.2018
(73) Patentinhaber: ETEL S.A., 2112 Môtiers (CH)
(72) Erfinder: FERNANDES GONCALVES, José Manuel, 2013 Colombier (CH)
(74) Vertreter: Pleyer, Hans Anno

(56) Entgegenhaltungen:
- EP-A1- 2 884 638
- EP-A2- 2 424 087
- WO-A2-2012/029998
- US-A- 5 751 077

## Beschreibung

### GEBIET DER TECHNIK

Die vorliegende Erfindung betrifft ein Primärteil eines Linearmotors, das mit einer Kühlplatte ausgestattet ist. Zur Steigerung der Leistung eines Linearmotors und zum Schutz der Umgebung vor übermäßigem Wärmeeintrag ist es notwendig, das Primärteil zu kühlen. Hierfür sind Kühlplatten geeignet, die in der Nähe der Spulen des Primärteils angeordnet sind.

### STAND DER TECHNIK

Linearmotoren sind aus der US 5642013 A bekannt. Hier wird beschrieben, wie solche Antriebe aufgebaut werden können, um Rastmomente zu vermeiden oder jedenfalls deutlich zu reduzieren. Zur Kühlung dieser Motoren werden hier Kühlkanäle zwischen den Spulen tragenden Zähnen des Eisenkerns vorgeschlagen. Solche Kühlkanäle reduzieren allerdings den Füllfaktor der Zahnzwischenräume, die maximale Kraft eines so gekühlten Motors ist niedriger als bei einem Motor mit einem höheren Füllfaktor.

In der US 5864187 ist ein Linearmotor beschrieben, der von der Rückseite des Blechpakets, also von der den Zähnen und Spulen gegenüberliegenden Seite her gekühlt wird. Hierzu sitzt der in Epoxidharz vergossene Eisenkern in einem aktiv gekühlten Rahmen aus Metall, auf dessen Rückseite, also den Zähnen und Spulen des Eisenkerns abgewandt, Kühlkanäle verlaufen. In einem Ausführungsbeispiel sind Einlass und Auslass für das Kühlmittel nebeneinander am selben Ende des Linearmotors angeordnet. Ein mäanderförmiger Kühlkanal wandert zum gegenüber liegenden Ende des Linearmotors und von dort wieder zurück, so dass die Kühlwirkung über die ganze Länge des Motors gleichmäßig verteilt ist. Solche mäanderförmigen Kühlkanäle sind allerdings wegen der häufigen Richtungswechsel beim Fräsen sehr aufwändig zu fertigen.

In der US 6731028 B2 ist eine Kühlplatte für das Primärteil eines Linearmotors beschrieben, die auf der Rückseite des Primärteils angeordnet ist. Der Bereich zwischen den aus dem Blechpaket ragenden Wicklungsköpfen und der Kühlplatte ist mit einer wärmeleitenden Vergussmasse gefüllt. Die Kühlplatte ist von Kühlkanälen mit vergleichsweise großem Querschnitt durchzogen. Die Kühlplatte kann daher nicht besonders flach hergestellt werden, und trägt deutlich zur Gesamthöhe des Primärteils bei. Ein nachträglicher Einbau einer solchen Kühlplatte verändert den Luftspalt des Linearmotors erheblich, oder ist sogar aus Platzgründen nicht

Die Druckschrift US5751077 A wird als nächstliegender Stand der Technik angesehen und offenbart die Präambel des unabhängigen Anspruchs 1.

### ZUSAMMENFASSUNG DER ERFINDUNG

Es ist daher Aufgabe der Erfindung, ein Primärteil mit einer besonders flach ausgebildeten Kühlplatte anzugeben, die auch bei einem nachträglichen Einbau den Luftspalt des Linearmotors nicht oder nicht wesentlich verändert. Diese Aufgabe wird gelöst durch eine Vorrichtung gemäß Anspruch 1. Vorteilhafte Details dieser Vorrichtung ergeben sich auch aus den von Anspruch 1 abhängigen Ansprüchen.

Es wird ein Primärteil eines Linearmotors beschrieben, mit einer auf der dem Luftspalt des Linearmotors abgewandten Seite des Primärteils montierten Kühlplatte mit Kühlkanälen. Diese Kühlkanäle sind über zwischen der Kühlplatte und den Wicklungsköpfen des Primärteils in der Bewegungsrichtung verlaufende Kanäle eines Verteilers mit einem Kühlmitteleinlass und mit einem Kühlmittelauslass verbunden.

Die Kühlplatte ist aus miteinander verbundenen ersten und zweiten Platten aufgebaut, zwischen denen die Kühlkanäle quer zur Bewegungsrichtung verlaufen.

Die Kühlkanäle zwischen den beiden als Bleche ausgebildeten Platten der Kühlplatte sind zahlreich und über die ganze Fläche der Platten verteilt. Sie sind beispielsweise durch einen Ätz- oder Fräsprozess hergestellt, so dass die gesamte Dicke der Kühlplatte durch die Dicke der beiden Bleche bestimmt ist. Für die Zufuhr bzw. Abfuhr des Kühlmittels dienen die Kanäle im Verteiler. Diese sind seitlich des Blechpakets und oberhalb der Wicklungsköpfe des Primärteils angeordnet und benötigen daher keine zusätzliche Bauhöhe. Ein nachträglicher Einbau einer solchen Kühlplatte hat also nur einen geringen Einfluss auf den Luftspalt des Linearmotors. Es ist sogar möglich, von der Rückseite des Blechpakets eine der Dicke der Kühlplatte entsprechende Schicht zu entfernen, so dass beim nachträglichen Einbau der Kühlplatte der Luftspalt gänzlich unverändert bleiben kann. Dies ist ohne nennenswerte negative Beeinflussung der elektrischen Parameter wie beispielsweise der Kraftkonstante des Linearmotors möglich, da der magnetische Fluss in diesem Bereich des Blechpaketes vernachlässigbar klein ist. Dank der verbesserten Wärmeabfuhr erhöht sich aber die dauerhaft abgebbare Kraft bzw. der entsprechende Motorstrom.

Weitere Details und Vorteile der Erfindung werden anhand der nachfolgenden Beschreibung eines Ausführungsbeispiels verdeutlicht.

### KURZE BESCHREIBUNG DER ZEICHNUNGEN

Dabei zeigt
- Figur 1: eine Kühlplatte und ein Primärteil vor der Montage,
- Figur 2: die Kühlplatte in einer Explosionsdarstellung,
- Figur 3: die Kühlplatte und das Primärteil nach der Montage,
- Figur 4: eine alternative Ausführungsform eins Details der Kühlplatte.

### BESCHREIBUNG DER AUSFÜHRUNGSFORMEN

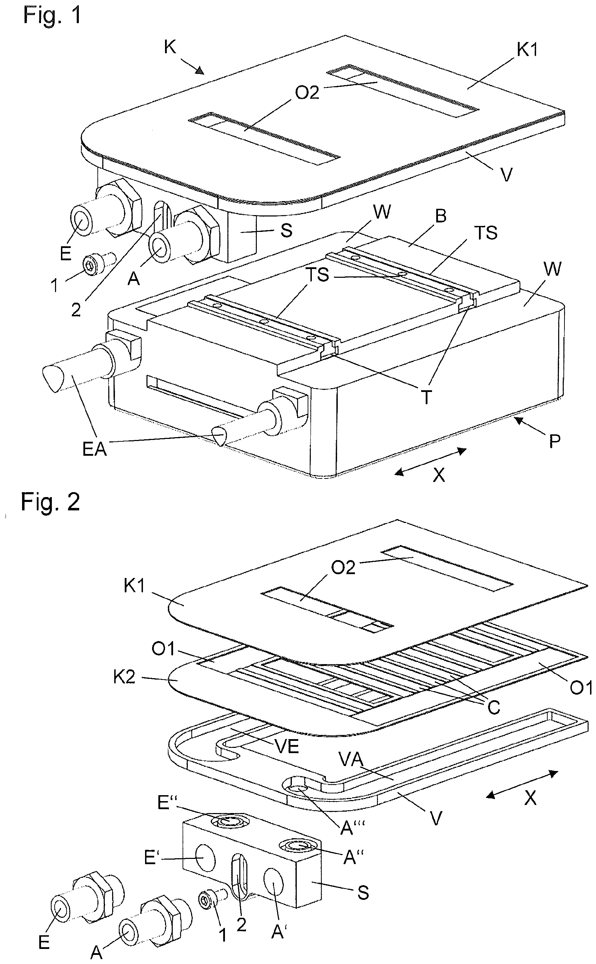

In der Figur 1 erkennt man das Primärteil P eines Linearmotors. Dessen Blechpaket B weist hier nicht sichtbare Eisenzähne auf, die mit Spulen bewickelt sind. Die Zähne weisen dabei zum ebenfalls nicht dargestellten Sekundärteil des Linearmotors, auf dem Magnete mit abwechselnder Polarität angeordnet sind. Zwischen dem Primärteil P und dem Sekundärteil ist ein kleiner Abstand vorgesehen, der sogenannte Luftspalt des Linearmotos. Die Wicklungsköpfe W der Spulen ragen seitlich aus dem Blechpaket B und sind von einer Vergussmasse abgedeckt.

Das Blechpaket B weist auf seiner Rückseite außerdem Montageöffnungen T auf, die der Befestigung des Primärteils P an einer Maschine dienen. Hierfür dienen oft die dargestellten T-förmigen Nuten T, es können aber auch Gewindebohrungen und ähnliches zum Einsatz kommen.

Im Bereich der Montageöffnungen T sind außerdem Stufen TS zu erkennen. Diese bewirken, dass die erhöhten Bereiche der Stufen TS als Anschlag an den Anbaubereich der jeweiligen Maschine dienen, während der etwas zurückgesetzte Bereich des Blechpakets B mit der Kühlplatte K in Berührung kommt. Die Stufenhöhe der Stufen TS ist größer oder gleich der Dicke der Kühlplatte K. Toleranzen bei der Herstellung der Kühlplatte K spielen für den Luftspalt des Linearmotors keine Rolle, wenn die maximale Dicke der Kühlplatte K nicht größer ist als die Stufenhöhe.

Die Stufen TS können schon bei der Herstellung des Primärteils P eingebracht werden, oder auch erst nachträglich, wenn eine Kühlplatte K nachgerüstet werden soll. Das zur Herstellung der Stufen TS zu entfernende Material des Blechpakets B spielt in beiden Fällen für die Funktion des Primärteils P keine entscheidende Rolle, da in diesem Bereich nur ein sehr geringer magnetischer Fluss geleitet werden muss. Auch bei einer Nachrüstung der Kühlplatte K ändern sich daher die elektrischen Parameter des Linearmotors nicht nennenswert. Der Luftspalt bleibt dank der Stufen TS trotz der zusätzlich eingebauten Kühlplatte K unverändert. Auf die Stufen TS kann aber auch verzichtet werden, wenn entweder eine kleine Änderung des Luftspalts akzeptabel ist, oder wenn eine konstruktive Änderung an der Maschine möglich ist, durch die der Luftspalt ebenfalls konstant gehalten werden kann.

Die Figur 2 zeigt in einer Explosionsdarstellung den Aufbau der Kühlplatte K. Zwei miteinander verlötete Platten K1, K2 bilden die eigentliche Kühlplatte K. Die Platten K1, K2 sind als Bleche (z.B. aus Edelstahl oder Aluminium) ausgeführt, die beispielsweise ca. 0,4 mm - 0,6 mm dick sind, so dass die Kühlplatte K im Bereich des Blechpaketes B nur etwa einen Millimeter stark ist. In eine oder auch in beide Platten K1, K2 sind Kühlkanäle C geätzt oder gefräst, die quer zur Bewegungsrichtung X des Linearmotors verlaufen. Auch wenn die einzelnen Kühlkanäle C nur einen kleinen Querschnitt aufweisen können, so sind doch ausreichend viele Kanäle über die ganze Fläche verteilt, so dass insgesamt genügend Kühlmittel durch die Kühlplatte K strömen kann.

Um ausreichend Kühlmittel zu den Kühlkanälen C zwischen den Platten K1, K2 führen zu können, ist ein Verteiler V vorgesehen, der im Wesentlichen zwischen der Kühlplatte K und den Wicklungsköpfen W des Primärteils P angeordnet ist. Innerhalb des Verteilers V verlaufen Kanäle VE, VA in der Bewegungsrichtung X des Linearmotors, und versorgen die Kühlkanäle C in der Kühlplatte K über zwei Öffnungen O1 in der Platte K2. Die Umrandung der in der Bewegungsrichtung X erstreckten Öffnungen O1 der Platte K2 ist jeweils mit dem Verteiler V verlötet, und zwar so, dass Kühlmittel aus dem Kanal VE in die Kühlkanäle C strömen kann, bzw. aus den Kühlkanälen C in den Kanal VA.

Über ein Anschlussstück S stehen die Kanäle VE, VA des Verteilers V mit einem Kühlmitteleinlass E und einem Kühlmittelauslass A in Verbindung. Das Anschlussstück S lenkt den senkrecht zur Kühlplatte K aus dem Verteiler V austretenden Kühlmittelstrom um 90 Grad um, so dass der Kühlmitteleinlass E und der Kühlmittelauslass A parallel zu den elektrischen Anschlüssen EA des Primärteils P verlaufen.

Das Kühlmittel gelangt also vom Kühlmitteleinlass E über die Öffnungen E', E" des Anschlussstücks S in den Kanal VE des Verteilers V (dessen entsprechende Einlassöffnung hier verdeckt ist), und über die Auslassöffnung A'" im Verteiler V und die Öffnungen A", A' des Anschlussstücks S zurück zum Kühlmittelauslass A.

Das Anschlussstück S und der Verteiler V können miteinander verlötet werden. Alternativ kann auch eine Schraubverbindung erfolgen. Dann ist es ratsam, zur Abdichtung der Öffnungen E" und A" Dichtungsringe vorzusehen. Kreisförmige Nuten zur Aufnahme solcher Dichtringe rund um diese Öffnungen sind in der Figur 2 zu erkennen.

Die Kühlplatte K bzw. die Platten K1, K2 weisen korrespondierende Montageöffnungen O2 auf, durch die hindurch die Stufen TS des Blechpaketes B ragen. Diese Stufen TS können also weiterhin ihre Funktion als Anschlagfläche für die Montage des Primärteils P an einer Maschine erfüllen.

Der Verteiler V und das Anschlussstück S bilden einen rechten Winkel, der als Anschlag bei der Montage der Kühlplatte K am Primärteil P hilfreich ist. Die Befestigung erfolgt mittels einer Schraube 1, die durch ein Langloch 2 im Anschlussstück S geführt wird. Dieses Langloch 2 ermöglicht die Befestigung der Kühlplatte K unabhängig davon, ob die Stufen TS nachträglich hergestellt wurden oder nicht, und ermöglicht es außerdem, die Kühlplatte K für verschiedene Motortypen mit unterschiedlichen Abmessungen einzusetzen.

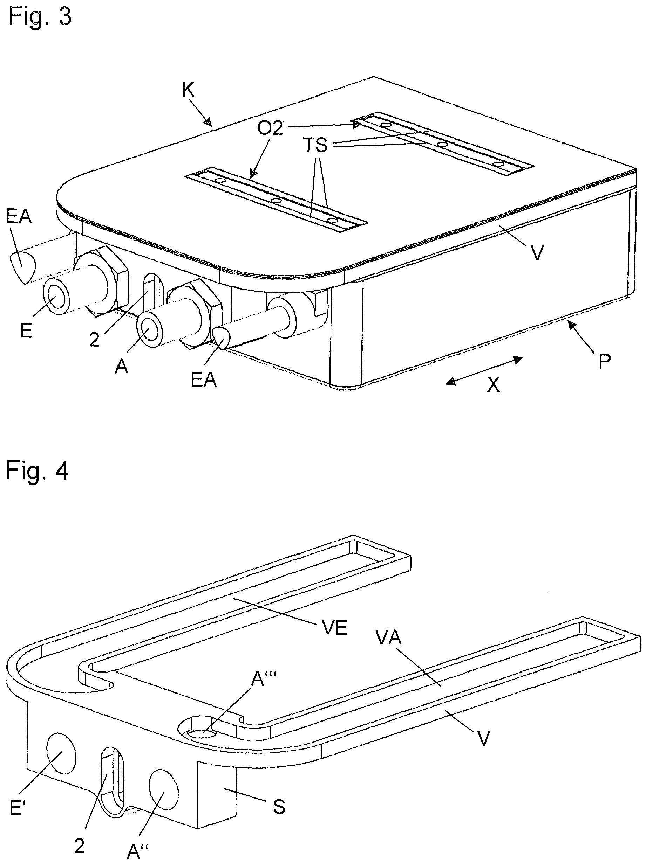

Die Figur 3 zeigt die Kühlplatte K im montierten Zustand am Primärteil P. Man erkennt, dass die durch die Montageöffnungen O2 ragenden Stufen TS bündig mit der Platte K1 abschließen, oder minimal über diese hinausstehen. Die Montageöffnungen O2 dienen auch der Ausrichtung der Kühlplatte K am Primärteil P. Zwischen der Platte K2 und dem Blechpaket B sorgt eine Wärmeleitpaste für einen guten Wärmeübergang.

Die Figur 4 zeigt eine alternative Ausführungsform für den Verteiler V und das Anschlussstück S, die hier einstückig als ein einziges Bauteil ausgeführt sind. Diese Variante ist besonders dann nützlich, wenn sowohl die Kühlplatte K als auch der Verteiler V und das Anschlussstück S aus Aluminium gefertigt sind. Der Grundgedanke der Erfindung, nämlich die Kühlplatte K selbst besonders dünn auszuführen, und die zur Zu- und Abfuhr des Kühlmittels benötigen großen Querschnitte der Kanäle VE, VA seitlich zwischen die Wicklungsköpfe W und die Kühlplatte K zu verlegen, lassen sich auch mit dieser Ausführungsform umsetzen.

Insgesamt erhält man also eine Kühlplatte K, die den Luftspalt eines Linearmotors nicht oder nur geringfügig beeinflusst, und die somit auch für eine Nachrüstung in Maschinen geeignet ist, die ansonsten nicht abgeändert werden können, um den Luftspalt trotz zusätzlicher Kühlplatte K konstant zu halten. Die Kühlplatte K ist dennoch relativ einfach herzustellen.

## Patentansprüche

1. Primärteil eines Linearmotors, mit einer auf der einem Luftspalt des Linearmotors abgewandten Seite des Primärteils (P) montierten Kühlplatte (K) mit Kühlkanälen (C), wobei die Kühlkanäle (C) über zwischen der Kühlplatte (K) und Wicklungsköpfen (W) des Primärteils (P) in einer Bewegungsrichtung (X) des Linearmotors verlaufende Kanäle (VE, VA) eines Verteilers (V) mit einem Kühlmitteleinlass (E) und mit einem Kühlmittelauslass (A) verbunden sind, wobei die Kühlplatte (K) aus miteinander verbundenen ersten und zweiten Platten (K1, K2) aufgebaut ist, zwischen denen die Kühlkanäle (C) quer zur Bewegungsrichtung (X) verlaufen, **dadurch gekennzeichnet, dass** ein Blechpaket (B) des Primärteils (P) auf der dem Luftspalt abgewandten Seite vorspringende Stufen (TS) und Montageöffnungen (T) aufweist, wobei die Montageöffnungen (T) als T-förmige Nuten auf der Rückseite des Blechpakets (B) der Befestigung des Primärteils (P) an einer Maschine dienen, und die Stufenhöhe der vorspringenden Stufen (TS) größer oder gleich einer Dicke der Kühlplatte (K) ist, dass die erhöhten Bereiche der Stufen (TS) als Anschlag an den Anbaubereich der jeweiligen Maschine dienen, während der etwas zurückgesetzte Bereich des Blechpakets (B) mit der Kühlplatte (K) in Berührung kommt, und dass die Platten (K1, K2) übereinanderliegende Öffnungen (O2) aufweisen, die mit den vorspringenden Stufen (TS) korrespondieren, so dass die Kühlplatte (K) anhand der übereinanderliegenden Öffnungen (O2) und Stufen (TS) am Primärteil (P) ausgerichtet ist und die Toleranzen bei der Herstellung der Kühlplatte (K) für den Luftspalt des Linearmotors keine Rolle spielen, wenn die maximale Dicke der Kühlplatte (K) nicht größer ist als die Stufenhöhe.

2. Primärteil nach Anspruch 1, **dadurch gekennzeichnet, dass** die Platten (K1, K2) der Kühlplatte (K) zwei miteinander verlötete Bleche sind.

3. Primärteil nach Anspruch 1 oder 2, **dadurch gekennzeichnet, dass** die Kühlkanäle (C) mittels eines Fräsprozesses oder eines Ätzprozesses in eine der Platten (K1, K2) oder in beide Platten (K1, K2) eingebracht sind.

4. Primärteil nach einem der vorhergehenden Ansprüche, **dadurch gekennzeichnet, dass** die dem Primärteil (P) zugewandte Platte (K2) zwei in die Bewegungsrichtung (X) erstreckte und mit den Kühlkanälen (C) verbundene Öffnungen (O1) aufweist, die außerdem mit den Kanälen (VE, VA) des Verteilers (V) korrespondieren, und deren Umrandung mit dem Verteiler V verlötet ist.

5. Primärteil nach einem der vorhergehenden Ansprüche, **dadurch gekennzeichnet, dass** der Verteiler (V) mit einem Anschlussstück (S) verbunden ist, der einen senkrecht zur Kühlplatte (K) aus dem Verteiler (V) austretenden Kühlmittelstrom um 90 Grad umleitet, so dass der Kühlmitteleinlass (E) und der Kühlmittelauslass (A) parallel zu elektrischen Anschlüssen (EA) des Primärteils (P) verlaufen.

6. Primärteil nach Anspruch 5, **dadurch gekennzeichnet, dass** der Verteiler (V) und das Anschlussstück (S) zusammen einen rechten Winkel bilden, der als Anschlag für die Kühlplatte (K) am Primärteil (P) wirkt.

## Claims

1. Primary part of a linear motor, with a cooling plate (K), which is mounted on the side of the primary part (P) which faces away from an air gap of the linear motor, with cooling channels (C), wherein the cooling channels (C) are connected to a coolant inlet (E) and to a coolant outlet (A) via channels (VE, VA), running between the cooling plate (K) and end windings (W) of the primary part (P) in a direction of movement (X) of the linear motor, of a distributor (V), wherein the cooling plate (K) is constructed from first and second plates (K1, K2) connected to one another, between which the cooling channels (C) run transversely to the direction of movement (X), **characterized in that** a laminated core (B) of the primary part (P) has, on the side facing away from the air gap, projecting steps (TS) and mounting openings (T), wherein the mounting openings (T) serve as T-shaped grooves on the rear side of the laminated core (B) for fastening the primary part (P) to a machine, and the step height of the projecting steps (TS) is greater than or equal to a thickness of the cooling plate (K), that the elevated regions of the steps (TS) serve as a stop at the attachment region of the respective machine, while the slightly recessed region of the laminated core (B) comes into contact with the cooling plate (K), and that the plates (K1, K2) have openings (O2) which lie on top of one another and which correspond to the projecting steps (TS) so that the cooling plate (K) is aligned on the primary part (P) on the basis of openings (O2) and steps (TS) lying on top of one another and the tolerances during the production of the cooling plate (K) for the air gap of the linear motor do not play any role if the maximum thickness of the cooling plate (K) is not larger than the step height.

2. Primary part according to Claim 1, **characterized in that** the plates (K1, K2) of the cooling plate (K) are two sheets which are soldered to one another.

3. Primary part according to Claim 1 or 2, **characterized in that** the cooling channels (C) are incorporated in one of the plates (K1, K2) or in both plates (K1, K2) by means of a milling process or an etching process.

4. Primary part according to any one of the preceding claims, **characterized in that** the plate (K2) facing the primary part (P) has two openings (O1) extended in the direction of movement (X) and connected to the cooling channels (C) which furthermore correspond to the channels (VE, VA) of the distributor (V) and the edging of which is soldered to distributor V.

5. Primary part according to any one of the preceding claims, **characterized in that** the distributor (V) is connected to an attachment piece (S) which diverts a coolant flow exiting from the distributor (V) perpendicular to the cooling plate (K) by 90 degrees so that the coolant inlet (E) and the coolant outlet (A) run parallel to electrical terminals (EA) of the primary part (P).

6. Primary part according to Claim 5, **characterized in that** the distributor (V) and the attachment piece (S) jointly form a right angle which acts as a stop for the cooling plate (K) on the primary part (P).

## Revendications

1. Partie primaire d'un moteur linéaire, comprenant une plaque de refroidissement (K) pourvue de canaux de refroidissement (C) et montée sur le côté de la partie primaire (P) qui est opposée à un entrefer du moteur linéaire, les canaux de refroidissement (C) étant reliés à une entrée d'agent de refroidissement (E) et à une sortie d'agent de refroidissement (A) par des canaux (VE, VA) d'un distributeur (V) qui s'étendent entre la plaque de refroidissement (K) et des têtes d'enroulement (W) de la partie primaire (P) dans une direction de déplacement (X) du moteur linéaire, la plaque de refroidissement (K) étant composée de première et deuxième plaques (K1, K2) qui sont reliées entre elles et entre lesquelles les canaux de refroidissement (C) s'étendent transversalement à la direction de déplacement (X), **caractérisée en ce qu'**un noyau stratifié (B) de la partie primaire (P) comporte des gradins (TS), saillant du côté opposé à l'entrefer, et des trous de montage (T),
les trous de montage (T) servant de rainures en forme de T du côté arrière du noyau stratifié (B) pour fixer la partie primaire (P) à une machine, et la hauteur des gradins saillants (TS) étant supérieure ou égale à l'épaisseur de la plaque de refroidissement (K), **en ce que** les zones surélevées des gradins (TS) servent de butée contre la zone de rapportée de la machine respective, tandis que la zone légèrement en retrait du noyau stratifié (B) vient en contact avec la plaque de refroidissement (K), et **en ce que** les plaques (K1, K2) comportent des ouvertures superposées (O2) correspondant aux gradins saillants (TS) de sorte que la plaque de refroidissement (K) est orientée au moyen des ouvertures superposées (O2) et des gradins (TS) au niveau de la partie primaire (P) et les tolérances de fabrication de la plaque de refroidissement (K) ne jouent aucun rôle sur l'entrefer du moteur linéaire si l'épaisseur maximale de la plaque de refroidissement (K) n'est pas supérieure à la hauteur des gradins.

2. Partie primaire selon la revendication 1, **caractérisée en ce que** les plaques (K1, K2) de la plaque de refroidissement (K) sont deux tôles soudées l'une à l'autre.

3. Partie primaire selon la revendication 1 ou 2, **caractérisée en ce que** les canaux de refroidissement (C) sont introduits dans l'une des plaques (K1, K2) ou dans les deux plaques (K1, K2) au moyen d'un procédé de fraisage ou d'un procédé de gravure.

4. Partie primaire selon l'une des revendications précédentes, **caractérisée en ce que** la plaque (K2), dirigée du côté de la partie primaire (P), comporte deux ouvertures (O1) qui sont étirées dans la direction de déplacement (X), qui sont reliées aux canaux de refroidissement (C), qui correspondent aux canaux (VE, VA) du distributeur (V) et dont le bord périphérique est soudé au distributeur V.

5. Partie primaire selon l'une des revendications précédentes, **caractérisée en ce que** le distributeur (V) est relié à une pièce de liaison (S) qui dévie de 90 degrés un flux d'agent de refroidissement sortant du distributeur (V) perpendiculairement à la plaque de refroidissement (K) de sorte que l'entrée d'agent de refroidissement (E) et la sortie d'agent de refroidissement (A) s'étendent parallèlement à des connexions électriques (EA) de la partie primaire (P).

6. Partie primaire selon la revendication 5, **caractérisée en ce que** le distributeur (V) et la partie de liaison (S) forment conjointement une équerre qui sert de butée à la plaque de refroidissement (K) au niveau de la partie primaire (P).
